# EUROPÄISCHE PATENTSCHRIFT

(11) **EP 2 312 187 B1**
(45) Veröffentlichungstag und Bekanntmachung des Hinweises auf die Patenterteilung: **28.11.2012**
(21) Anmeldenummer: 10405194.1
(22) Anmeldetag: 14.10.2010
(51) Int. Cl.: F16K 31/02, G05D 23/19

(54) **Vorrichtung mit einem linear verstellbaren Hubteil**
Device with a linearly adjustable lifting part
Appareil avec une partie de levage réglable linéairement

(30) Priorität: 16.10.2009 CH 15912009
(43) Veröffentlichungstag der Anmeldung: 20.04.2011
(73) Patentinhaber: Unovatis GmbH, 38229 Salzgitter (DE)
(72) Erfinder: Köhler, Ivo, 4057 Basel (CH); Kernen, Roland, 4132 Muttenz (CH); Seelmann, Christian, 31174 Schellerten (DE); Namendorf, Hans-Joachim, 31162 Bad Salzdetfurth (DE)
(74) Vertreter: Bohest AG

(56) Entgegenhaltungen:
- GB-A- 936 136
- GB-A- 2 068 545
- GB-A- 2 265 186
- GB-A- 2 328 492

## Beschreibung

Die vorliegende Erfindung betrifft eine Vorrichtung mit einem zwischen einer ersten Endposition und einer zweiten Endposition linear verstellbaren Hubteil, einem strombetriebenen thermischen Hubteilantrieb zur Verstellung des Hubteils in Richtung der zweiten Endposition und einem Rückstellelement zur Rückstellung des Hubteils in Richtung der ersten Endposition, wie z.B. in Dokument GB 2 068 545 offenbart ist. Eine solche Vorrichtung kann zum Betätigen eines Ventils mit einer mit dem Hubteil wirkungsmässig verbindbaren Betätigungsspindel eingesetzt werden.

In verschiedenen technischen Gebieten, wie beispielsweise in der Heizungs-, Lüftungs- und Klimatechnik (HLK), werden Ventile für die Durchflussregelung eingesetzt. Die verwendeten Ventile weisen häufig eine aus einem Gehäuse ragende Betätigungsspindel auf, die über eine bestimmte Strecke bewegbar ist. Die Betätigungsspindel ist mit einem Verschlussorgan verbunden, wie beispielsweise einem bei einer Durchflussöffnung angeordneten Teller, der die Durchflussöffnung dicht abschliesst, wenn er an ihr anliegt. Weiter wirkt auf die Betätigungsspindel eine Ventilrückstellfeder, mit welcher die Betätigungsspindel in einer Normalstellung, in der keine Kraft von aussen auf die Betätigungsspindel wirkt, aus dem Gehäuse gedrückt wird. Typischerweise sind die Ventile so ausgestaltet, dass sie in dieser Normalstellung entweder geschlossen oder geöffnet sind. Zur Betätigung eines solchen Ventils wird die Betätigungsspindel entgegen der Federkraft der Ventilrückstellfeder in das Gehäuse gedrückt und damit das Verschlussorgan so bewegt, dass das Ventil geöffnet bzw. geschlossen wird.

Zum automatisierten Betätigen solcher Ventile werden heute verschiedene Ausführungen von Ventilantrieben eingesetzt. Beispielsweise umfasst ein solcher Ventilantrieb ein linear verstellbares Hubteil, einen strombetriebenen thermischen Hubteilantrieb mit einer Widerstandsheizung sowie eine Rückstellfeder. Das Hubteil ist mit der Betätigungsspindel des Ventils wirkungsmässig verbunden. Wenn die Widerstandsheizung mit Strom beaufschlagt wird, bewirkt dies einerseits, dass die Rückstellfeder gespannt wird und andrerseits, dass das Hubteil von einer ersten Endposition in eine zweite Endposition verstellt wird. Die Federkraft der Rückstellfeder ist dabei grösser ausgelegt als die Federkraft der Ventilrückstellfeder, so dass das Hubteil die Betätigungsspindel in das Gehäuse des Ventils drückt, wenn der strombetriebene thermische Hubteilantrieb nicht mit Strom beaufschlagt wird.

Bei Ventilantrieben der oben beschriebenen Art muss der jeweilige strombetriebene thermische Hubteilantrieb dauerhaft mit Strom beaufschlagt werden, um die Betätigungsspindel des daran angeschlossenen Ventils nach einer Verstellung in Position zu halten. Da ein derartiger Ventilantrieb einen Stromverbrauch von typischerweise rund 2 Watt aufweist, kann dies bei einer grösseren Anlage mit einigen hundert bis einigen tausend Ventilantrieben einen nicht unerheblichen Stromverbrauch verursachen.

Der vorliegenden Erfindung liegt daher die Aufgabe zugrunde, eine Vorrichtung zu schaffen, mit welcher ein stromsparender Ventilantrieb realisiert werden kann, der insbesondere die obenstehenden Nachteile nicht aufweist.

Diese Aufgabe wird durch die erfindungsgemässe Vorrichtung gelöst, wie sie im unabhängigen Vorrichtungsanspruch definiert ist. Der unabhängige Verwendungsanspruch definiert eine Verwendung der erfindungsgemässen Vorrichtung. Vorteilhafte Ausführungsvarianten ergeben sich aus den abhängigen Patentansprüchen.

Das Wesen der Erfindung besteht darin, dass die erfindungsgemässe Vorrichtung einen zwischen einer ersten Endposition und einer zweiten Endposition linear verstellbaren Hubteil, einen strombetriebenen thermischen Hubteilantrieb zur Verstellung des Hubteils in Richtung der zweiten Endposition und ein Rückstellelement zur Rückstellung des Hubteils in Richtung der ersten Endposition umfasst. Ausserdem weist die Vorrichtung eine Arretierungseinrichtung auf, mit der das Hubteil in einer beliebigen Position ausserhalb der ersten Endposition arretierbar ist.

Durch die Arretierung ausserhalb der ersten Endposition kann das Hubteil ausserhalb der ersten Endposition gehalten werden, auch wenn der strombetriebene thermische Hubteilantrieb nicht mehr mit Strom versorgt wird. Somit kann Energie eingespart werden. Dies ist insbesondere in grösseren Anlagen von Interesse, in denen mehrere hundert oder sogar mehrere tausend Ventilantriebe eingesetzt werden.

Vorzugsweise weist bei der erfindungsgemässen Vorrichtung die Arretierungseinrichtung ein Arretierelement zur Arretierung des Hubteils ausserhalb der ersten Endposition, ein Stellelement zur Verstellung des Arretierelements von einer Ausgangsposition in eine Arretierposition und ein Arretier-Rückstellelement zur Rückstellung des Arretierelements in die Ausgangsposition auf. Mit Hilfe des Arretierelements, des Stellelements und des Arretier-Rückstellelements kann auf einfache Art und Weise die Arretiereinrichtung konstruiert werden, um das Hubteil ausserhalb der ersten Endposition zu arretieren.

Vorteilhafterweise umfasst bei der erfindungsgemässen Vorrichtung das Stellelement einen elektrischen Magnet zur Verstellung des Arretierelements in Richtung der Arretierposition. Ein elektrischer Magnet ist eine konstruktiv einfache Lösung, um den Stellschlitten in die Arretierposition zu verstellen. Der elektrische Magnet braucht nur einen kurzen Steuerstrom, um den Stellschlitten zu verstellen, und anschliessend können sowohl der elektrische Magnet als auch der strombetriebene thermische Hubteilantrieb stromlos geschaltet werden.

Vorzugsweise weist bei der erfindungsgemässen Vorrichtung die Arretierungseinrichtung ein Zwischenelement auf, das zwischen dem strombetriebenen thermischen Hubteilantrieb und dem Hubteil angeordnet ist. Das Zwischenelement ermöglicht die einfache Realisierung einer Arretierungseinrichtung, die in jeder Position arretierbar ist.

Mit Vorteil weisen bei der erfindungsgemässen Vorrichtung das Arretierelement und das Zwischenelement jeweils eine schiefe Ebene auf, die aneinander anliegen und gegeneinander in jeder Position arretierbar sind. Die Arretierung über die schiefen Ebenen des Arretierelements und des Zwischenelements erlaubt die Realisierung eines Ventilantriebs, der stromlos in jeder Position arretierbar ist.

Vorteilhafterweise umfasst bei der erfindungsgemässen Vorrichtung das Stellelement eine Stellfeder, die eine Kraft auf das Arretierelement von der Ausgangsposition in Richtung einer beliebigen Arretierposition ausübt. Die Stellfeder bewirkt ein automatisches Nachstellen des Arretierelements in Richtung einer beliebigen Arretierposition, so dass das Hubteil in jeder Position arretiert werden kann, sobald der strombetriebene thermische Hubteilantrieb stromlos geschaltet wird.

Vorzugsweise umfasst bei der erfindungsgemässen Vorrichtung die Arretierungseinrichtung eine Löseeinrichtung, z. B. einen FGL-Draht (FGL = Form-Gedächtnis-Legierung), einen elektrischen Magnet oder ein Bimetall, zum Lösen des gegeneinander arretierten Arretierelements und Zwischenelements. Nachdem das Hubteil arretiert wurde, sollte es auch wieder gelöst werden können, um die Arretierposition zu verlassen. Hierfür ist die Löseeinrichtung zuständig. Sie ermöglicht auf einfache Art und Weise die Arretierung der schiefen Ebenen wieder zu lösen.

Mit Vorteil umfassen bei der erfindungsgemässen Vorrichtung das Rückstellelement und/oder das Arretier-Rückstellelement jeweils mindestens eine Rückstellfeder. Rückstellfedern erlauben auf einfache Art und Weise das Rückstellelement und/oder das Arretier-Rückstellelement zu realisieren, um das Hubteil bzw. das Arretierelement nach dem Lösen der Arretierung wieder in die Ausgangsposition zurückkehren zu stellen.

Ein weiterer Aspekt der Erfindung betrifft eine Verwendung der erfindungsgemässen Vorrichtung zum Betätigen eines Ventils, wobei das Ventil eine Betätigungsspindel und die Vorrichtung ein mit der Betätigungsspindel wirkungsmässig verbindbares Hubteil umfasst. Durch die Verwendung der erfindungsgemässen Vorrichtung zum Betätigen eines Ventils ist eine Stromzufuhr für den strombetriebenen thermischen Hubteilantrieb nur erforderlich, um die Betätigungsspindel zu bewegen. In der ersten bzw. in der zweiten Endposition kann das Hubteil in einem stromlosen Zustand arretiert werden. Somit kann Energie eingespart werden. Dies ist insbesondere in grösseren Anlagen von Interesse, in denen mehrere hundert oder sogar mehrere tausend Ventilantriebe eingesetzt werden.

Im Folgenden werden die erfindungsgemässe Vorrichtung und die erfindungsgemässe Verwendung einer solchen Vorrichtung unter Bezugnahme auf die beigefügten Zeichnungen anhand eines Ausführungsbeispiels detaillierter beschrieben. Es zeigen:
- Fig. 1 -: Teile eines Ausführungsbeispiels der erfindungsgemässen Vorrichtung mit einem Arretierelement in einer Ausgangsposition in verschiedenen Ansichten;
- Fig. 2 -: die Teile von Fig. 1 mit dem Arretierelement in einer Arretierposition in verschiedenen Ansichten; und
- Fig. 3 -: die Teile von Fig. 1 mit dem Arretierelement in der Arretierposition von Fig. 2 mit einer aktivierten Löseeinrichtung in verschiedenen Ansichten.

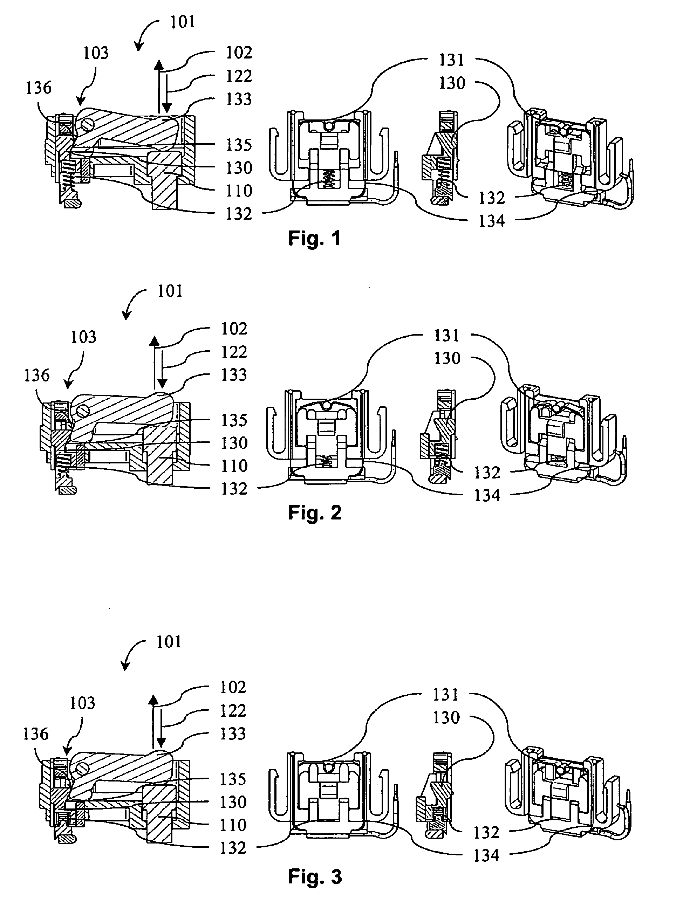

Die Fig. 1 bis 3 zeigen Teile eines Ausführungsbeispiels der erfindungsgemässen Vorrichtung in Form eines Ventilantriebs 101 in verschiedenen Ansichten, wobei in Fig. 1 eine Ausgangsposition, in Fig. 2 eine Arretierposition und in Fig. 3 die Arretierposition der Fig. 2 mit einer aktivierten Löseeinrichtung dargestellt sind. Der Ventilantrieb 101 umfasst ein linear verstellbares Hubteil 110, das zwischen einer ersten Endposition und einer zweiten Endposition verstellbar ist. Ein strombetriebener thermischer Hubteilantrieb zur Verstellung des Hubteils 110 in Richtung der zweiten Endposition und eine Rückstellfeder zur Rückstellung des Hubteils 110 in Richtung der ersten Endposition sind durch eine Aktorkraft 102 und eine Rückstellfederkraft 122 angedeutet. Mit einer Arretierungseinrichtung 103 ist das Hubteil 110 in einer Position ausserhalb der ersten Endposition arretierbar. Die Arretierungseinrichtung 103 umfasst ein Arretierelement 130 und ein drehbar angeordnetes Zwischenelement 133 in Form eines Kipphebels, dessen eine Ende am Arretierelement 130 und dessen andere Ende am Hubteil 110 anliegt. Des Weiteren umfasst die Arretierungseinrichtung 103 eine Stellfeder 131, die eine Kraft auf das Arretierelement 130 ausübt, die von einer Ausgangsposition in Richtung einer beliebigen Arretierposition wirkt und eine Rückstellfeder 132 als Arretier-Rückstellelement zur Rückstellung des Arretierelements 130 in die Ausgangsposition. Die Federkraft der Stellfeder 131 ist dabei grösser ausgelegt, als die Federkraft der Rückstellfeder 132. Das Arretierelement 130 und das Zwischenelement 133 weisen jeweils eine schiefe Ebene 135 bzw. 136 auf, die aneinander anliegen und gegeneinander in jeder Position arretierbar sind.

Bei einer durch den Hubteilantrieb ausgelösten Verstellung des Hubteils 110 von der ersten Endposition in Richtung der zweiten Endposition erfolgt eine Verstellung des Zwischenelements 133, was aufgrund der Stellfeder 131 auch eine Verstellung des Arretierelements 130 zur Folge hat. Wird nun der strombetriebene thermische Hubteilantrieb stromlos geschaltet, so wird das Hubteil über den Formschluss der schiefen Ebene 135 des Arretierelements 130 und der schiefen Ebene 136 des Zwischenelements 133 in der aktuellen Position arretiert (siehe Fig. 2). Falls nun der strombetriebene thermische Hubteilantrieb wiederum mit Strom beaufschlagt wird, so kann das Hubteil noch weiter in Richtung der zweiten Endposition verstellt werden, bis es schliesslich in der zweiten Endposition arretiert werden kann. Um das Hubteil wieder in Richtung der ersten Endposition verstellen zu können, umfasst die Arretiereinrichtung 103 einen FGL-Draht 134 (FGL = Form-Gedächtnis-Legierung) als Löseeinrichtung zum Lösen des gegeneinander arretierten Arretierelements 130 und Zwischenelements 133. Der FGL-Draht 134 kehrt bei Wärme- oder Stromzufuhr das Ungleichgewicht zwischen der Federkraft der Stellfeder 131 und der Federkraft der Rückstellfeder 132 um, zugunsten der Federkraft der Rückstellfeder 132, indem er eine Kraft in der gleichen Richtung wie die Rückstellfeder 132 ausübt. Dadurch wird das Arretierelement 130 in die Ausgangsposition zurück gestellt, sobald der Formschluss der schiefen Ebene 135 des Arretierelements 130 und der schiefen Ebene 136 des Zwischenelements 133 entfällt. Dies bewirkt ein Lösen der Arretierung des Zwischenelements 133 und des Hubteils 110, wonach das Hubteil 110 durch die Rückstellfederkraft 122 in die erste Endposition zurückverstellt wird.

Zu den vorbeschriebenen Vorrichtungen sind weitere konstruktive Variationen realisierbar. Insbesondere ist auch die Konstruktion einer Arretiervorrichtung denkbar, die zwischen einem Ventil und einem herkömmlichen Ventilantrieb eingefügt werden kann. Mittels einer Steuerelektronik können dabei der herkömmliche Ventilantrieb und die Arretiervorrichtung so angesteuert werden, dass das Hubteil in jeder Position arretiert werden kann.

## Patentansprüche

1. Vorrichtung (101) mit einem zwischen einer ersten Endposition und einer zweiten Endposition linear verstellbaren Hubteil (110), einem strombetriebenen thermischen Hubteilantrieb (102) zur Verstellung des Hubteils (110) in Richtung der zweiten Endposition und einem Rückstellelement (122) zur Rückstellung des Hubteils (110) in Richtung der ersten Endposition, **dadurch gekennzeichnet, dass** sie eine Arretierungseinrichtung (103) aufweist, mit der das Hubteil (110) in einer beliebigen Position ausserhalb der ersten Endposition arretierbar ist.

2. Vorrichtung (101) nach Anspruch 1, bei der die Arretierungseinrichtung (103) ein Arretierelement (130) zur Arretierung des Hubteils (110) ausserhalb der ersten Endposition, ein Stellelement (131) zur Verstellung des Arretierelements (130) von einer Ausgangsposition in eine Arretierposition und ein Arretier-Rückstellelement (132) zur Rückstellung des Arretierelements (130) in die Ausgangsposition aufweist.

3. Vorrichtung nach Anspruch 2, bei der das Stellelement einen elektrischen Magnet zur Verstellung des Arretierelements in Richtung der Arretierposition umfasst.

4. Vorrichtung (101) nach Anspruch 2, bei der die Arretierungseinrichtung (103) ein Zwischenelement (133) aufweist, das zwischen dem strombetriebenen thermischen Hubteilantrieb (102) und dem Hubteil (110) angeordnet ist.

5. Vorrichtung (101) nach Anspruch 4, bei der das Arretierelement (130) und das Zwischenelement (133) jeweils eine schiefe Ebene (135, 136) aufweisen, die aneinander anliegen und gegeneinander in jeder Position arretierbar sind.

6. Vorrichtung (101) nach einem der Ansprüche 2, 4 oder 5, bei der das Stellelement eine Stellfeder (131) umfasst, die eine Kraft auf das Arretierelement von der Ausgangsposition in Richtung einer beliebigen Arretierposition ausübt.

7. Vorrichtung (101) nach Anspruch 5 oder 6, bei der die Arretierungseinrichtung eine Löseeinrichtung, z. B. einen FGL-Draht (134), einen elektrischen Magnet oder ein Bimetall, zum Lösen des gegeneinander arretierten Arretierelements (130) und Zwischenelements (133) umfasst.

8. Vorrichtung (101) nach einem der Ansprüche 2 bis 7, bei der das Rückstellelement und/oder das Arretier-Rückstellelement jeweils mindestens eine Rückstellfeder (122, 132) umfassen.

9. Verwendung einer Vorrichtung (101) nach einem der Ansprüche 1 bis 8 zum Betätigen eines Ventils, wobei das Ventil eine Betätigungsspindel und die Vorrichtung ein mit der Betätigungsspindel wirkungsmässig verbindbares Hubteil (110) umfasst.

## Claims

1. Device (101) with a lifting part (110), which is linearly displaceable between a first end position and a second end position, a current-driven thermal drive of the lifting part (102) for displacing the lifting part (110) in the direction of the second end position, and a resetting element (122) for resetting the lifting part (110) in the direction of the first end position,
**characterised in that** it comprises a locking apparatus (103), with which the lifting part (110) can be locked in any position outside of the first end position.

2. Device (101) according to claim 1, wherein the locking apparatus (103) has a locking element (130) for locking the lifting part (110) outside of the first end position, a displacing element (131) for displacing the locking element (130) from a starting position in a locking position, and a locking resetting element (132) for resetting the locking element (130) in the starting position.

3. Device according to claim 2, wherein the displacing element comprises an electrical magnet for displacing the locking element in the direction of the locking position.

4. Device (101) according to claim 2, wherein the locking apparatus (103) has an intermediate element (133), which is disposed between the current-driven thermal drive of the lifting part (102) and the lifting part (110).

5. Device (101) according to claim 4, wherein the locking element (130) and the intermediate element (133) each have an inclined plane (135, 136), which abut each other and are lockable against each other in any position.

6. Device (101) according to any one of claims 2, 4 or 5, wherein the displacing element comprises a displacing spring (131), which exerts a force on the locking element from the starting position in the direction of any locking position.

7. Device (101) according to claim 5 or 6, wherein the locking apparatus comprises a release apparatus, such as a shape memory alloy wire (134), an electrical magnet or a bimetal, for releasing the locking element (130) and the intermediate element (133) which are locked against each other.

8. Device (101) according to any one of claims 2 to 7, wherein the resetting element and/or the locking resetting element each comprise at least a resetting spring (122, 132).

9. Use of a device (101) according to any one of claims 1 to 8 for actuating a valve, wherein the valve comprises an actuating spindle and the device comprises a lifting part (110) which is operatively connectable with the actuating spindle.

## Revendications

1. Dispositif (101) avec une partie de levage (110) déplaçable linéairement entre une première position finale et une seconde position finale, un entraînement thermique (102) de partie de levage, à fonctionnement électrique, pour déplacer la partie de levage (110) en direction de la seconde position finale, et un élément de rappel (122) pour le rappel de la partie de levage (110) en direction de la première position finale,
**caractérisé en ce qu'**il comprend un système d'arrêt (103), au moyen duquel la partie de levage (110) peut être arrêtée dans une position quelconque à l'extérieur de la première position finale.

2. Dispositif (101) selon la revendication 1, dans lequel le système d'arrêt (103) comprend un élément d'arrêt (130) pour arrêter la partie de levage (110) à l'extérieur de la première position finale, un élément de positionnement (131) pour déplacer l'élément d'arrêt (130) depuis une position de départ jusque dans une position d'arrêt, et un élément de rappel d'arrêt (132) pour rappeler l'élément d'arrêt (130) dans la position de départ.

3. Dispositif selon la revendication 2, dans lequel l'élément de positionnement comprend un aimant électrique pour déplacer l'élément d'arrêt en direction de la position d'arrêt.

4. Dispositif (101) selon la revendication 2, dans lequel le système d'arrêt (103) comprend un élément intermédiaire (133) qui est agencé entre l'entraînement thermique (102) de la partie de levage et la partie de levage (110).

5. Dispositif (101) selon la revendication 4, dans lequel l'élément d'arrêt (130) et l'élément intermédiaire (133) comportent chacun un plan oblique (135, 136), qui sont appliqués l'un contre l'autre et peuvent être arrêtés l'un par rapport à l'autre dans toute position.

6. Dispositif (101) selon l'une des revendications 2, 4 ou 5, dans lequel l'élément de positionnement comprend un ressort de positionnement (131) qui exerce une force sur l'élément d'arrêt depuis la position de départ en direction d'une position d'arrêt quelconque.

7. Dispositif (101) selon la revendication 5 ou 6, dans lequel le système d'arrêt comprend un système de libération, par exemple un fil d'un alliage mémoire de forme (134), un aimant électrique ou un bilame, pour libérer l'élément d'arrêt (130) et l'élément intermédiaire (133) arrêtés l'un par rapport à l'autre.

8. Dispositif (101) selon l'une des revendications 2 à 7, dans lequel l'élément de rappel et/ou l'élément de rappel d'arrêt comprennent chacun au moins un ressort de rappel (122, 132).

9. Utilisation d'un dispositif (101) selon l'une des revendications 1 à 8 pour actionner une vanne, ladite vanne comprenant une broche d'actionnement, et le dispositif comprenant une partie de levage (110) à relier en termes d'action à la broche d'actionnement.
